# EUROPÄISCHE PATENTANMELDUNG

(11) **EP 4 335 685 A1**
(43) Veröffentlichungstag der Anmeldung: **13.03.2024**
(21) Anmeldenummer: 23182978.9
(22) Anmeldetag: 03.07.2023
(51) Int. Cl.: B60L 15/20, B60L 15/00, B60L 50/53, B60L 50/60, B60L 53/80, B60L 58/26, H02P 27/06, H02P 29/60

(54) **ELEKTRISCHES ANTRIEBSSYSTEM**

(30) Priorität: 24.08.2022 DE 102022208756
(71) Anmelder: Siemens Mobility GmbH, 81739 München (DE)
(72) Erfinder: Vladykin, Alexey, 90480 Nürnberg (DE)
(74) Vertreter: Siemens Patent Attorneys

(57) **Zusammenfassung**

Die vorliegende Erfindung betrifft ein elektrisches Antriebssystem (14) für ein Schienenfahrzeug (10), wobei das Schienenfahrzeug (10) wenigstens zwei eigenständig antreibbare Fahrzeugeinheiten (12) aufweist, wobei die Fahrzeugeinheiten (12) jeweils von wenigstens einem Motor (18) antreibbar sind und der jeweils wenigstens eine Motor (18) von einem Inverter (16) versorgt wird in einer Motor-Inverter-konfiguration, die das Verhältnis der Motoren (18) pro Inverter (16) beschreibt, wobei wenigstens zwei verschiedene eigenständig antreibbare Fahrzeugeinheiten (12) eine zueinander unterschiedliche Motor-Inverter-Konfiguration aufweisen.

## Beschreibung

Die vorliegende Erfindung betrifft ein elektrisches Antriebssystem. Die vorliegende Erfindung betrifft insbesondere ein elektrisches Antriebssystem, welches auf vorteilhafte Weise eine Anpassung an einen unterschiedlichen Fahrzeugaufbau erlaubt.

Elektrische Maschinen sind als Generatoren und/oder elektrische Motoren weit bekannt. Beispielsweise werden Elektromotoren als Antriebsmotoren in elektrisch angetriebenen Schienenfahrzeugen eingesetzt. Dabei sind bestimmte Anforderungen insbesondere hinsichtlich der Leistung zu erfüllen. Solche Anforderungen für ein Fahrzeug beispielsweise mit festem Fahrgestell können leicht erfüllt werden, indem vorhandene Portfolioelemente, insbesondere Motoren und Umrichter, mit einer bestimmten Motorkonfiguration kombiniert werden, also etwa mit einem Umrichter in Einzel- oder Gruppenspeisung. Ein derartiges Antriebssystem kann leicht nach einem Kostenkriterium innerhalb eines bestehenden Portfolios in einem Unternehmen optimiert werden, um eine kostengünstige Lösung zu erhalten.

Derartige Lösungen weisen jedoch noch weiteres Verbesserungspotential auf.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung, eine Lösung bereitzustellen, durch welche auf vorteilhafte Weise Vorgaben hinsichtlich der Leistungsfähigkeit umgesetzt werden können.

Die Lösung der Aufgabe erfolgt erfindungsgemäß zumindest zum Teil durch ein elektrisches Antriebssystem mit den Merkmalen des Anspruchs 1. Die Lösung der Aufgabe erfolgt erfindungsgemäß ferner zumindest zum Teil durch einen Antriebsstrang mit den Merkmalen des Anspruchs 9 sowie durch ein Fahrzeug mit den Merkmalen des Anspruchs 10. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Beschrieben wird ein elektrisches Antriebssystem für ein Schienenfahrzeug, wobei das Schienenfahrzeug wenigstens zwei eigenständig antreibbare Fahrzeugeinheiten aufweist, wobei die Fahrzeugeinheiten jeweils von wenigstens einem Motor antreibbar sind und der jeweils wenigstens eine Motor von einem Inverter versorgt wird in einer Motor-Inverter-konfiguration, die das Verhältnis der Motoren pro Inverter beschreibt, wobei wenigstens zwei verschiedene eigenständig antreibbare Fahrzeugeinheiten eine zueinander unterschiedliche Motor-Inverter-Konfiguration aufweisen.

Ein derartiges Antriebssystem kann gegenüber den Lösungen aus dem Stand der Technik deutliche Vorteile aufweisen, insbesondere hinsichtlich einer verbesserten Umsetzung von Leistungsanforderungen.

Beschrieben wird somit ein elektrisches Antriebssystem für ein Schienenfahrzeug. Das Schienenfahrzeug kann dabei grundsätzliches jegliches elektrisch angetriebene Schienenfahrzeug sein, wobei derartige Schienenfahrzeuge auch als EMUs (electric multiple unit) bezeichnet werden können. Derartige Schienenfahrzeuge können beispielsweise Untergrundbahnen, Straßenbahnen, Regionalzüge, Fernzüge oder ähnliches sein.

Gemein ist derartigen Schienenfahrzeugen im Rahmen der vorliegenden Erfindung, dass diese wenigstens zwei eigenständig antreibbare Fahrzeugeinheiten aufweisen. Die Fahrzeugeinheiten können beispielsweise Triebwagen oder auch andere Zugteile sein, welche mit wenigstens einem Elektromotor ausgestattet sind. Darüber hinaus sind die Fahrzeugeinheiten mit wenigstens einem auch als Umrichter bezeichneten Inverter ausgestattet.

Grundsätzlich ist dabei die Wahl des jeweiligen Motors, der als Elektromotor ausgestaltet ist, beziehungsweise des Inverters nicht beschränkt. Bevorzugt können jedoch Asynchronmotoren verwendet werden, da diese besonders vorteilhaft in einer Gruppenspeisung verwendet werden können. Darüber hinaus zeigen derartige Motoren insbesondere im Teillastbetrieb oder bei lastlosen Rollphasen geringe Verluste.

Hinsichtlich der Inverter können beispielsweise Silizium-Inverter, Siliziumcarbid-Inverter, Galliumnitrid-Inverter oder Diamant-Inverter verwendet werden, ohne jedoch hierauf beschränkt zu sein.

Die eigenständig antreibbaren Fahrzeugeinheiten sind ferner jeweils von wenigstens einem Motor antreibbar und der jeweils wenigstens ein Motor wird von einem Inverter versorgt in einer bestimmten Motor-Inverter-Konfiguration. Diese Motor-Inverter-konfiguration beschreibt das Verhältnis der Motoren pro Inverter. In anderen Worten wird durch die Motor-Inverter-konfiguration beschrieben, ob ein Inverter einen Motor versorgt, also eine Einzelspeisung vorliegt, oder ob der Inverter mehr als einen Motor versorgt, also eine Gruppenspeisung vorliegt. Bekannte Konfigurationen umfassen etwa eine 1C1M-Konfiguration, also einen Inverter pro Fahrmotor, oder auch 1C2M, also einen Inverter für zwei auch als Traktionsmotoren bezeichnete Fahrmotoren.

Bei dem hier beschriebenen Antriebssystem ist es nunmehr vorgesehen, dass wenigstens zwei verschiedene eigenständig antreibbare Fahrzeugeinheiten eine zueinander unterschiedliche Motor-Inverter-Konfiguration aufweisen. In anderen worten wird somit nicht mehr, wie im Stand der Technik üblich, das gesamte Schienenfahrzeug mit einem einheitlichen Antriebssystem ausgestattet, sondern die Motor-Inverter-Konfiguration ist bei dem Schienenfahrzeug bei unterschiedlichen Fahrzeugeinheiten zueinander verschieden. Das soll bedeuten, dass beispielhaft eine Fahrzeugeinheit in Einzelspeisung angetrieben wird und eine andere Fahrzeugeinheit in Gruppenspeisung und/oder dass zwei Fahrzeugeinheiten in Gruppenspeisung betrieben werden, wobei jedoch die Anzahl der Motoren pro Inverter unterschiedlich ist, usw. Dabei ist es verständlicher Weise möglich, dass weitere Fahrzeugeinheiten vorgesehen sein können, dessen Motor-Inverter-Konfiguration zueinander identisch oder auch verschieden sein können.

Das beschriebene Antriebssystem begegnet dem Problem, wonach je nach Fahrzeugkonfiguration, also insbesondere Anzahl der Fahrzeugeinheiten, einige der Fahrzeuge in einer Plattform-Serie nach einem Kostenkriterium optimiert sind, so dass ein hoher Grad an Umrichter- und Motorauslastung erreicht werden kann. Das Antriebssystem eines Fahrzeugs gemäß dem Stand der Technik, welches eine feste Länge aufweist und auch als Plattformfahrzeug bezeichnet werden kann, ist in der Regel symmetrisch aufgebaut. Ferner sind alle Fahrmotoren gleich konfiguriert, etwa in den Konfigurationen 1C1M, 1C2M oder 1C4M.

Gleichzeitig sind im Stand der Technik durch die symmetrische Anordnung und Vereinheitlichung der Komponenten meist entweder die Fahrzeuge in einer Plattform übermotorisiert oder die Umrichterleistung ist überdimensioniert. In anderen Worten kann durch eine reine Plattformlösung meist nicht optimal die Motor-Inverter-Konfiguration auf die möglichen Gegebenheiten, also beispielsweise auf die Anzahl an Fahrzeugeinheiten, angepasst werden.

Demgegenüber liefert die vorliegende Erfindung eine Lösung mit einer höheren Motor- und Wechselrichterauslastung in jedem Plattformfahrzeug, unabhängig von der verwendeten Anzahl an Fahrzeugeinheiten. Durch die gemischte Motor-Inverter-Konfiguration kann eine hohe Auslastung des Umrichters erreicht werden, insbesondere bei Gruppenkonfiguration, wie etwa 1C2M, und gleichzeitig wird eine hohe Motorauslastung, etwa bei einer Einzelspeisung, also bei einer 1C1M-Konfiguration, erlaubt. Denn die Motor-Inverter-Konfiguration kann problemlos exakt auf die jeweiligen Gegebenheiten, wie insbesondere Anzahl an Fahrzeugeinheiten, abgepasst werden, so dass beispielsweise bei dem Hinzufügen oder Weglassen einer Fahrzeugeinheit von einer vorgegebenen Plattformlösung jeweils genauso viele Motoren und Inverter vorgesehen sein können, um eine gewünschte Antriebskraft bereitzustellen.

Eine derartige Optimierung des Antriebssystems nach einem Kostenkriterium ist bei einer Fahrzeugplattform nach dem Stand der Technik mit unterschiedlicher Anzahl von Fahrzeugen wesentlich komplexer oder gar nicht durchzuführen. Die vorliegende Erfindung trägt dazu bei, die Kosten des Antriebssystems für eine Fahrzeugplattform mit standardisierten Komponenten weiter zu reduzieren, indem eine unsymmetrische Anordnung der Traktionsmotoren einen reibungslosen Übergang des Antriebssystems von einer Fahrzeugarchitektur zur anderen ermöglicht. Die vorliegende Erfindung ermöglicht somit einen fließenden Übergang der Traktionsleistung von einer Fahrzeuglänge, also der Anzahl an Fahrzeugeinheiten beziehungsweise Wageneinheiten, zu einer anderen, insbesondere in Abhängigkeit von geforderten fahrdynamischen Indikatoren und dabei zu optimierten Kosten für das Antriebssystem.

Eine Überdimensionierung des Antriebssystems mit Bezug auf die Inverter- oder die Motorauslastung kann so auf ein Minimum beschränkt werden. Im Gegenteil kann eine verbesserte Ausnutzung der Wechselrichterleistung auf einzelnen Fahrzeugen einer Plattform ermöglicht werden. Gleichermaßen kann eine höhere Ausnutzung der Motorleistung bei einzelnen Fahrzeugen einer Plattform erreicht werden.

Dadurch kann weiterhin insbesondere mit Bezug auf eine konkrete Anwendung schon bei der Herstellung des Schienenfahrzeugs eine flexible Skalierung des Antriebssystems nach oben und unten für unterschiedliche Kundenanforderungen möglich sein. Dadurch kann eine kostenorientierte und gleichzeitig angepasste Lösung ermöglicht werden.

Bevorzugt können die Motoren der wenigstens zwei verschiedenen eigenständig antreibbaren Fahrzeugeinheiten baugleich sein. Zusätzlich oder alternativ kann es von Vorteil sein, dass die Inverter der wenigstens zwei verschiedenen eigenständig antreibbaren Fahrzeugeinheiten baugleich sein. Unter einer baugleichen Ausgestaltung kann im Sinne der vorliegenden Erfindung verstanden werden, dass ein einheitlicher Umrichter- und/oder Motortyp verwendet wird und damit die Motoren beziehungsweise Umrichter sowohl von der Konstruktion, also mechanisch als auch von der elektrischen Seite her identisch sind. Diese Ausgestaltung kann den Vorteil aufweisen, wonach das Antriebssystem weiterhin weitestgehend in einer Plattformlösung beziehungsweise mit vordefinierten Komponenten ausbildbar ist. Dies ermöglicht eine weitere Kostenreduzierung. Darüber hinaus können die Serviceanforderungen auf diese Weise reduziert werden, was auch den Betrieb vereinfacht.

Dabei können nur die Motoren und/oder Inverter der wenigstens zwei betrachteten Fahrzeugeinheiten baugleich sein oder, was im Sinne der vorliegenden Erfindung bevorzugt sein kann, sämtliche Fahrmotoren und/oder sämtliche diese betreibenden Inverter des gesamten Antriebssystems beziehungsweise Schienenfahrzeugs können baugleich sein.

Das Vorstehende ist gleichermaßen gültig für die Ausgestaltung der Inverter als auch zusätzlich oder alternativ für die Ausgestaltung der Motoren.

Es kann weiter bevorzugt sein, dass die unterschiedlichen Inverter-Motor-Konfigurationen ausgewählt werden in Abhängigkeit wenigstens eines vorgegebenen Leistungscharakteristikums. In dieser Ausgestaltung ist eine asymmetrische Motor-Inverter-Konfiguration besonders vorteilhaft umsetzbar. Denn insbesondere mit Bezug auf die Leistungscharakteristika sind die Motoren und die Inverter vorteilhaft einsetzbar, da das Vorhandensein der Motoren beziehungsweise der Inverter einen direkten Einfluss auf die Leistung des Schienenfahrzeugs beziehungsweise seines Antriebs aufweist. Darüber hinaus sind gerade die Leistungscharakteristika des Schienenfahrzeugs meist eine Kundenanforderung, welche es bei der Konfiguration und Herstellung des Schienenfahrzeugs umzusetzen gilt.

Dabei ist es in dieser Ausgestaltung möglich, etwa sowohl gleiche Leistungscharakteristika bei einer unterschiedlichen Anzahl an Fahrzeugeinheiten bereitzustellen, oder auch bei einer gleichen Anzahl an Fahrzeugeinheiten unterschiedliche Leistungscharakteristika zu ermöglichen.

Als besonders wichtiges Leistungscharakteristikum, welches es bei der Ausgestaltung beziehungsweise Konfiguration des Antriebssystems zu beachten gilt, kann insbesondere die Beschleunigung unter verschiedenen Bedingungen gesehen werden. Entsprechend kann es von besonderem Vorteil sein, dass das Leistungscharakteristikum wenigstens einen Parameter enthält aus der Liste bestehend aus der durchschnittlichen Beschleunigung bis zu einer Zielgeschwindigkeit und der Restbeschleunigung bei Höchstgeschwindigkeit. Die genannten Anforderungen spielen eine wichtige Rolle bei der Festlegung der erforderlichen Traktionsleistung sowie der Zugkraft in Abhängigkeit von der Fahrzeuglänge (Anzahl der Wagen) usw. Durch Betrachtung wenigstens eines oder beider dieser Leistungscharakteristika können Kundenanforderungen besonders vorteilhaft umgesetzt werden und kann entsprechend eine Optimierung der Konfiguration des Antriebssystems besonders vorteilhaft umsetzbar sein.

Darüber hinaus kann bei der Anpassung der Motor-Inverter-Konfiguration an bestimmte Leistungscharakteristika auch bestimmte Parameter der zu befahrenden Fahrroute in Betracht gezogen werden. So können die Leistungscharakteristika beispielsweise davon abhängen, in welchem Maße Beschleunigungen und Bremsvorgänge stattfinden, oder auch ob und in welcher Weise ein Höhenprofil bei der Fahrtroute vorliegt, so dass etwa Steigungen oder Gefälle in Betracht gezogen werden. In dieser Ausgestaltung kann somit sichergestellt werden, dass die gewünschten Leistungscharakteristika auch auf einer spezifischen zu befahrenden Strecke eingehalten werden können.

Es kann weiterhin bevorzugt sein, dass das Antriebssystem wenigstens zwei Motoren aufweist, welche eine zueinander verschiedene Kühlung aufweisen. Unter einer verschiedenen Kühlung kann im Sinne der vorliegenden Erfindung insbesondere verstanden werden, dass die Kühlung auf einem unterschiedlichen Prinzip basiert, so etwa Wasser- und Luftkühlung etc. Besonders bevorzugt kann die unterschiedliche Kühlung sich auf eine Passiv- und eine Aktivkühlung beziehen. Es ist jedoch möglich, dass die betrachteten Motoren teilweise eine gleiche Kühlung aufweisen und nur manche Motoren eine andere, etwa eine Zusatzkühlung, aufweisen. Insbesondere kann es bevorzugt sein, dass wenigstens zwei Motoren eine Passivkühlung aufweisen und nur einer der zwei Motoren zusätzlich eine Aktivkühlung aufweist.

Insbesondere in der Ausgestaltung, wonach die Motoren baugleich sind, können etwa sämtliche Motoren eine Passivkühlung aufweisen und können die Motoren partiell mit einer Aktivkühlung zusatzgekühlt werden.

In dieser Ausgestaltung kann zusätzlich zu der Motor-Inverter-Konfiguration auch die Konfiguration der Kühlung für die entsprechenden Motoren an die bestehenden Anforderungen angepasst werden. Dies ist deshalb von Wichtigkeit, da anspruchsvolle Anforderungen an dynamische Indikatoren von Bahnbetreibern an EMU-Fahrzeuge eine Traktionsleistung eines einzelnen Motors auf ein hohes Niveau stellen. Die entsprechenden Arbeitszyklen, die im Fahrzeugbetrieb eingesetzt werden, erfordern ein effektives Kühlsystem für den Fahrmotor, um einen problemlosen Betrieb zu gewährleisten.

Entsprechend sollte das Kühlsystem hinsichtlich einer effektiven Kühlung optimiert werden. Eine derartige Optimierung des Kühlsystems für Fahrmotoren nach einem Kostenkriterium ist bei einem Plattformfahrzeug mit unterschiedlicher Wagenanzahl gemäß dem Stand der Technik wesentlich komplexer durchzuführen. Wird die Kühlung überdimensioniert, kann dies zu Kostennachteilen und komplexem Aufbau führen. Eine Unterdimensionierung ist ebenfalls strikt zu vermeiden, damit stets eine ausreichende Kühlung für einen sicheren Betrieb der Motoren sichergestellt ist.

Die vorliegende Erfindung ermöglicht es in dieser Ausgestaltung, die Systemkosten der Motorkühlung für ein einzelnes Fahrzeug mit einer bestimmten Anzahl an Wagen beziehungsweise an Fahreinheiten in einer Plattform mit unterschiedlicher Kühlung weiter zu reduzieren. Der Ansatz der gemischten Motorkühlung ermöglicht so unter anderem eine kosteneffiziente Auslegung des Motorkühlsystems auf Plattformebene. Denn die Kühlung kann dort besonders effektiv ausgestaltet sein, wo der Motor besonders stark ausgelastet ist und damit eine besonders leistungsstarke Kühlung erfordert. An weniger stark ausgelasteten Motoren dagegen, kann auch eine vergleichsweise geringere und damit kostengünstigere Kühlleistung vorgesehen sein. Denn es ist nicht mehr notwendig, dass jeder Motor und etwa jede Fahrzeugeinheit mit einem aktiven Kühlsystem ausgestattet ist. Entsprechende aktive Kühlsysteme umfassen etwa ein Gebläse mit Motor sowie ein Rohrleitungssystem, um den erforderlichen Luftstrom bei einem bestimmten Druckabfall zu erzeugen. Dies führt jedoch zu hohen Kosten, was erfindungsgemäß vermieden oder zumindest auf ein Mindestmaß reduziert werden kann.

Das Merkmal, wonach die hier betrachteten Motoren jeweils mit Passivkühlung ausgestaltet sind, jedoch nur zum Teil eine Aktivkühlung aufweisen, kann beispielsweise realisiert werden unter Verwendung einer auch als Zwangsbelüftung genannten Eigenbelüftung als Passivkühlung, also etwa Luftschaufeln am Rotor und genauer an der Rotorachse, und einer Fremdbelüftung, also etwa eine Belüftung mittels Gebläse, oder auch einer Fluidkühlung als Aktivkühlung, wobei diese Ausgestaltungen nur beispielhaft genannt sind.

Insbesondere, wenn sämtliche der betrachteten Motoren in den Fahrzeugen einer Plattform selbstbelüftet sind, kann eine kostenverbesserte Lösung ermöglicht werden, da bevorzugt hinsichtlich der Motoren auf Plattformlösungen zurückgegriffen werden kann.

Es kann somit ein offener Kreislauf mit Zwangsbelüftung als Passivkühlung vorgesehen sein, wodurch auch das Verwenden von Fahrmotoren mit hoher Leistung problemlos möglich ist.

Dem Konzept der gemischten Fahrmotorenkonfiguration für eine Plattform folgend, kann eine Maxleistung eines einzelnen Fahrmotors problemlos bei über ca. 500 kW liegen. Eine so hohe Leistung kann in einem realistischen Arbeitszyklus bevorzugt in Kombination mit einer erzwungenen Luftkühlung im offenen Kreislauf genutzt werden.

In dieser Ausgestaltung wird daher anstelle der nur identischen Kühlung der Motoren auf allen Plattformfahrzeugen auch die gemischte Motorkühlung, die Selbstlüftung und Zwangslüftung kombiniert, und dies vorteilhaft je nach konkreter Anforderung.

Somit erlaubt die Ausgestaltung einer gemischten Kühlung etwa die Verwendung einer hohen thermischen Motorkapazität, da der Motor in einem permanentem Teillastbetrieb arbeitet und über ein eingebautes Kühlgebläse verfügt. Ferner kann die AUX-Last, also die Hilfsbetriebe-Last, auf Fahrzeugebene gesenkt werden, da oftmals kein Gebläsemotor erforderlich ist. Die Anzahl der Gebläse und Rohrleitungssysteme am Fahrzeug zur Kühlung des Fahrmotors und damit die Systemkomplexität, können in dieser Ausgestaltung gesenkt werden.

Hinsichtlich weiterer Vorteile und technischer Merkmale des elektrischen Antriebssystems wird hiermit auf die Beschreibung des Antriebsstrangs, des Fahrzeugs, die Figur und die Beschreibung der Figur verwiesen.

Beschrieben wird ferner ein Antriebsstrang für ein Schienenfahrzeug, wobei der Antriebsstrang ein elektrisches Antriebssystem zum Antreiben einer Mehrzahl von Rädern oder einer Mehrzahl von Radsatzwellen umfasst, dadurch gekennzeichnet, dass das Antriebssystem ausgestaltet ist, wie vorstehend beschrieben.

Der Antriebsstrang ist in einem Bahnfahrzeug beziehungsweise Schienenfahrzeug angeordnet beziehungsweise ist Teil des Schienenfahrzeugs, so dass eine gute Implementierung in bereits bestehend Systeme sowie eine breite Anwendbarkeit gegeben ist. In diesem Fall kann der Antriebsstrang das vorbeschrieben Antriebssystem, mit Umrichtern, den Motoren, verbundenen Getrieben und Radsatzwellen umfassen. Denkbar sind jedoch grundsätzlich auch getriebelose Motoren.

Die spezifischen Vorteile eines derartigen Antriebsstrangs können insbesondere darin gesehen werden, dass eine besonders vorteilhafte Anpassung des Antriebsstrangs an unterschiedliche Schienenfahrzeuge und dabei insbesondere an Schienenfahrzeuge mit einer unterschiedlichen Anzahl an Fahrzeugeinheiten möglich ist.

Hinsichtlich weiterer Vorteile und technischer Merkmale des Antriebsstrangs wird hiermit auf die Beschreibung des elektrischen Antriebssystems, des Fahrzeugs, die Figur und die Beschreibung der Figur verwiesen.

Beschrieben wird ferner ein Schienenfahrzeug, wobei das Schienenahrzeug wenigstens eines von einem elektrischen Antriebssystem und einem Antriebsstrang aufweist, wie diese vorstehend beschrieben sind und wobei das Schienenfahrzeug wenigstens zwei eigenständig antreibbare Fahrzeugeinheiten umfasst.

Beispielsweise kann das Fahrzeug ein auch Bahnfahrzeug genanntes Schienenfahrzeug sein, da insbesondere für derartige Fahrzeuge entsprechende Antriebsstränge beziehungsweise elektrische Antriebssysteme geeignet sind. Entsprechend ist das Schienenfahrzeug insbesondere ein sogenanntes EMU-Fahrzeug.

Die vorstehend beschriebenen Vorteile sind auch für ein beschriebenes Schienenfahrzeug einschlägig, so dass eine besonders vorteilhafte Anpassung des Antriebsstrangs an unterschiedliche Schienenfahrzeuge und dabei insbesondere an Schienenfahrzeuge mit einer unterschiedlichen Anzahl an Fahrzeugeinheiten möglich ist.

Hinsichtlich weiterer Vorteile und technischer Merkmale des Schienenfahrzeugs wird hiermit auf die Beschreibung des elektrischen Antriebssystems, des Antriebsstrangs, die Figur und die Beschreibung der Figur verwiesen.

Weitere Einzelheiten, Merkmale und Vorteile des Gegenstandes der Erfindung ergeben sich aus den Unteransprüchen sowie aus der nachfolgenden Beschreibung der Figur. In der Figur zeigt:

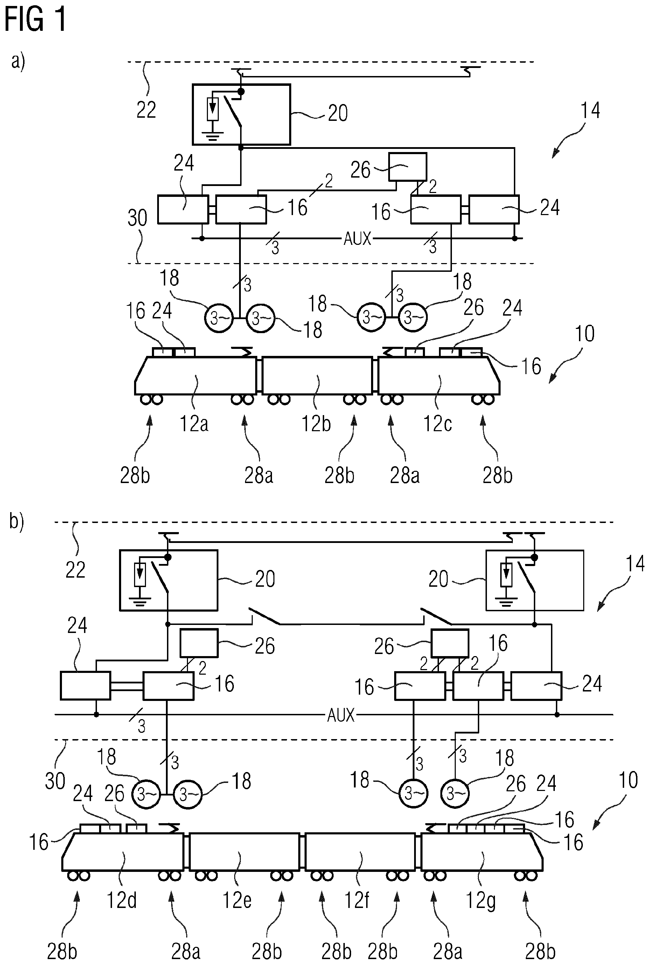

Fig. 1 eine Darstellung zeigend ein Antriebssystem für ein Schienenfahrzeug gemäß der vorliegenden Erfindung.

In der Figur 1 ist ein Schienenfahrzeug 10 gezeigt, welches insbesondere ein als EMU-Fahrzeug bezeichnetes Fahrzeug ist. Ferner ist ein hierfür ausgebildetes Antriebssystems 14 gezeigt.

Figur 1 zeigt im Detail die Vorteile einer gemischten Motor-Inverter-Konfiguration am Beispiel eines 3- und 4-Personen-Schienenfahrzeugs 10 beziehungsweise am Beispiel von Schienenfahrzeugen 10 mit einer unterschiedlichen Anzahl an Fahrzeugeinheiten 12. Das Antriebssystem 14 umfasst ein Bündel von einzelnen Untereinheiten mit einem Wechselrichter beziehungsweise Inverter 16 und einem Motor 18, der als Traktionsmotor bezeichnet werden kann. Ein entsprechender Gleichspannungszwischenkreis ist beispielsweise so konfiguriert, dass er während des Betriebs je nach der Spanungsklasse mit einer Spannung von 500 V und 4000 V DC versorgt wird.

Entsprechend zeigt die Figur 1a) ein Schienenfahrzeug 10 mit drei Fahrzeugeinheiten 12ₐ, 12_{b}, 12_{c} und zeigt die Figur 1b) ein Schienenfahrzeug 10 mit vier Fahrzeugeinheiten 12_{d}, 12ₑ, 12_{f}, 12_{g}. Es ist im Detail gezeigt, wie erfindungsgemäß eine Anpassung des elektrischen Antriebssystems 14 von dem drei Fahrzeugeinheiten 12ₐ, 12_{b}, 12_{c} umfassenden Schienenfahrzeug 10 der Figur 1a auf ein vier Fahrzeugeinheiten 12_{d}, 12ₑ, 12_{f}, 12_{g} umfassendes Schienenfahrzeug 10 gemäß Figur 1b möglich ist.

Das Antriebssystem 14 in Figur 1a) umfasst einen Schnellschalter 20 als Sicherheitskomponente, über welchen das Antriebssystem 14 mit einer Hochspannungsleitung 22 verbunden ist. Darüber hinaus ist gezeigt, dass die von der Hochspannungsleitung 22 anliegende Spannung zwei Inverter 16ₐ, 16_{b} und damit zwei Untereinheiten des Antriebssystems 14 speist über je eine Einheit 24 umfassend einen Hilfsumrichter und einen Netzfilter. Ferner ist je ein entsprechend verschalteter Bremswiderstand 26 gezeigt.

Bei der Ausgestaltung in der Figur 1a ist eine Motor-Inverter-Konfiguration vorgesehen, gemäß welcher in den Fahrzeugeinheiten 12ₐ, 12_{c} jeweils in Gruppenspeisung zwei Motoren 18 durch einen Inverter 16 versorgt werden. Die Motoren 18 treiben dabei Räder 28ₐ, wohingegen Räder 28_{b} nicht angetrieben werden. Die Anordnung der vorbeschriebenen Komponenten in dem Schienenfahrzeug 10 soll dabei durch das schematisch angedeutete Dach 30 gezeigt werden, wobei die entsprechenden Komponenten oberhalb oder unterhalb des Daches 30 angeordnet sind. Dies ist gleichermaßen der Abbildung des Schienenfahrzeugs 10 selbst gezeigt, wobei die Anordnung der Komponenten auf dem Dach ist beispielhaft gezeigt ist.

In der Figur 1b ist gezeigt, wie die Motor-Inverter-Konfiguration auf einfache Weise angepasst werden kann, wenn das Schienenfahrzeug 10 eine Fahrzeugeinheit 12 mehr umfasst als in der Ausgestaltung gemäß Figur 1a).

In Grundzügen ist das Antriebssystem 14 in der Figur 1b) entsprechend zu dem Antriebssystem 14 der Figur 1a) ausgebildet, wobei das Antriebssystem jedoch über zwei Schnellschalter 20 mit der Hochspannungsleitung 22 verbunden ist, wobei die Anzahl ja nach der Anwendung variiert werden kann.

Insbesondere ist jedoch gezeigt, dass wenigstens zwei verschiedene eigenständig antreibbare Fahrzeugeinheiten 12 eine zueinander unterschiedliche Motor-Inverter-Konfiguration aufweisen. So ist die Fahrzeugeinheit 12_{d} mit einer Motor-Inverter-Konfiguration in Gruppenspeisung, also mit einem Inverter 16 und zwei Motoren 18 ausgestattet, wohingegen die Fahrzeugeinheit 12_{f}) mit einer Motor-Inverter-Konfiguration in Einzelspeisung, also mit zwei Invertern 16 und zwei Motoren 18, ausgestattet ist. Dabei können die Inverter 16 und die Motoren 18 bevorzugt baugleich sein.

Dadurch kann eine einfache Anpassung an die veränderte Anzahl an Fahrzeugeinheiten 12 möglich sein. Die Anpassung kann insbesondere in Abhängigkeit wenigstens einer vorgegebenen Leistungscharakteristik, wie etwa Zielgeschwindigkeit und der Restbeschleunigung bei Höchstgeschwindigkeit, vorgenommen werden.

Durch die gemischte Motorkonfiguration kann eine hohe Auslastung des Inverters 16 erreicht werden, etwa bei Gruppenkonfiguration, z. B. 1C2M, und gleichzeitig kann eine hohe Motorauslastung beispielsweise durch eine 1C1M-Konfiguration erreicht werden. Figur 1b) zeigt den Vorteil der Verwendung einer solchen gemischten Motorenkonfiguration am Beispiel eines Schienenfahrzeugs 10 mit vier Fahrzeugeinheiten 12. Es ist zu beachten, dass alle für die Plattform verwendeten Motoren 18 und Inverter 16 konstruktiv und elektrisch identisch sein können.

Der Vorteil der Verwendung einer gemischten Motorkonfiguration kann somit darin gesehen werden, dass der Übergang von einer ersten zu einer zweiten Fahrzeuglänge und damit zu einer abweichenden Anzahl von Fahrzeugeinheiten 12 in einer Plattform reibungsloser beziehungsweise ohne Sprung verläuft. Im vorliegenden Fall ist es nicht erforderlich, die Anzahl der Motoren 18 zu erhöhen, wenn die gleiche Anzahl von Umrichterschränken beibehalten wird. Mit anderen Worten, es wird davon ausgegangen, dass die minimale Anzahl von Traktionskomponenten erforderlich ist, um eine gewünschte mittlere und Restbeschleunigungen zu erreichen.

In Abhängigkeit der gewählten Motor-Inverter-Konfiguration kann es ferner bevorzugt sein, wenn das Antriebssystem 14 wenigstens zwei Motoren 18 aufweist, welche eine zueinander verschiedene Kühlung aufweisen. Insbesondere können wenigstens zwei Motoren 18 eine Passivkühlung aufweisen und nur einer der zwei Motoren 18 kann zusätzlich eine Aktivkühlung aufweisen.

Der grundsätzliche Vorteil der gemischten Motorkühlung besteht darin, dass bei allen Motoren 18 einer Plattform beispielsweise ein eingebautes Gebläse auf der Rotorachse, unabhängig von der Motorkonfiguration, verwendet werden kann. Die Verwendung eines Kühlsystems kann bevorzugt so realisiert werden, dass die Motoren 18 immer in einem selbstbelüfteten Modus ohne externes, fahrzeugseitig angeschlossenes Kühlsystem betrieben werden, wenn die Motoren 18 im Teillastbetrieb, etwa in einer 1C2M -Konfiguration, z. B. Konfiguration mit drei Fahrzeugeinheiten 12, betrieben werden. Der gemischte Kühlbetrieb, also etwa eine Kombination aus Eigenlüftung durch eingebautes Gebläse an einer Rotorachse und einer Fremdlüftung von der Fahrzeugseite, kann verwendet werden, wenn die volle Zugkraftkurve als maximale Kurve etwa im Falle der 1C1M-Konfiguration eingestellt ist.

Im vorgestellten Fall ist es nicht erforderlich, die Zwangsbelüftung auf Fahrzeugebene an jeder Plattform zu installieren. Nur die motorisierten Wagen in einer 1C1M-Konfiguration können etwa mit einer erforderlichen Kühleinrichtung für Zwangsbelüftung ausgestattet werden, da die hohe Motorauslastung realisiert wird. Entsprechend kann die Kühlung derart ausgestaltet sein, dass die geforderten Leistungscharakteristika erfüllt werden können.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrisches Antriebssystem (14) für ein Schienenfahrzeug (10), wobei das Schienenfahrzeug (10) wenigstens zwei eigenständig antreibbare Fahrzeugeinheiten (12) aufweist, wobei die Fahrzeugeinheiten (12) jeweils von wenigstens einem Motor (18) antreibbar sind und der jeweils wenigstens eine Motor (18) von einem Inverter (16) versorgt wird in einer Motor-Inverter-konfiguration, die das Verhältnis der Motoren (18) pro Inverter (16) beschreibt, **dadurch gekennzeichnet, dass** wenigstens zwei verschiedene eigenständig antreibbare Fahrzeugeinheiten (12) eine zueinander unterschiedliche Motor-Inverter-Konfiguration aufweisen.

2. Elektrisches Antriebssystem (14) nach Anspruch 1, **dadurch gekennzeichnet, dass** die Motoren (18) der wenigstens zwei verschiedenen eigenständig antreibbaren Fahrzeugeinheiten (12) baugleich sind.

3. Elektrisches Antriebssystem (14) nach Anspruch 1 oder 2, **dadurch gekennzeichnet, dass** die Inverter (16) der wenigstens zwei verschiedenen eigenständig antreibbaren Fahrzeugeinheiten (12) baugleich sind.

4. Elektrisches Antriebssystem (14) nach einem der Ansprüche 1 bis 3, **dadurch gekennzeichnet, dass** die unterschiedlichen Inverter-Motor-Konfigurationen ausgewählt werden in Abhängigkeit wenigstens eines vorgegebenen Leistungscharakteristikums.

5. Elektrisches Antriebssystem (14) nach Anspruch 4, **dadurch gekennzeichnet, dass** das Leistungscharakteristikum wenigstens einen Parameter enthält aus der Liste bestehend aus der durchschnittlichen Beschleunigung bis zu einer Zielgeschwindigkeit und der Restbeschleunigung bei Höchstgeschwindigkeit.

6. Elektrisches Antriebssystem (14) nach einem der Ansprüche 1 bis 5, **dadurch gekennzeichnet, dass** die unterschiedlichen Inverter-Motor-Konfigurationen ausgewählt werden in Abhängigkeit der zu befahrenden Fahrroute.

7. Elektrisches Antriebssystem (14) nach einem der Ansprüche 1 bis 6, **dadurch gekennzeichnet, dass** das Antriebssystem (14) wenigstens zwei Motoren (18) aufweist, welche eine zueinander verschiedene Kühlung aufweisen.

8. Elektrisches Antriebssystem (14) nach Anspruch 7, **dadurch gekennzeichnet, dass** wenigstens zwei Motoren (18) eine Passivkühlung aufweisen und nur einer der zwei Motoren (18) zusätzlich eine Aktivkühlung aufweist.

9. Antriebsstrang für ein Schienenfahrzeug (10), wobei der Antriebsstrang ein elektrisches Antriebssystem (14) zum Antreiben einer Mehrzahl von Rädern oder einer Mehrzahl von Radsatzwellen umfasst, **dadurch gekennzeichnet, dass** das Antriebssystem (14) ausgestaltet ist nach einem der Ansprüche 1 bis 8.

10. Schienenfahrzeug (10), **dadurch gekennzeichnet, dass** das Schienenfahrzeug (10) wenigstens eines von einem elektrischen Antriebssystem (14) nach einem der Ansprüche 1 bis 8 und einem Antriebsstrang nach Anspruch 9 aufweist, und wobei das Schienenfahrzeug (10) wenigstens zwei eigenständig antreibbare Fahrzeugeinheiten (12) umfasst.
